# FASCICULE DE BREVET EUROPEEN

(11) **EP 0 852 688 B1**
(45) Date de publication et mention de la délivrance du brevet: **14.04.1999**
(21) Numéro de dépôt: 96932656.0
(22) Date de dépôt: 26.09.1996
(51) Int. Cl.: F24F 12/00, F24F 3/044, F24F 5/00

(54) **DISPOSITIF DE GESTION OPTIMISEE DE L'AIR DANS UN LOCAL**
VORRICHTUNG ZUR OPTIMIERTEN RAUMLUFTSTEUERUNG
DEVICE FOR OPTIMISING AIR MANAGEMENT IN A ROOM

(30) Priorité: 26.09.1995 FR 9511251
(43) Date de publication de la demande: 15.07.1998
(73) Titulaire: Neurones, 72140 Sille-le-Guillaume (FR); Clement, Pierre, 75013 Paris (FR); Clement, Bruno, 75013 Paris (FR); Clement, Christelle, 75013 Paris (FR); Clement, Martine, 75013 Paris (FR); Clement, Sabine, 75013 Paris (FR)
(72) Inventeur: CLEMENT, Pierre, F-75013 Paris (FR); CLEMENT, Bruno, F-75013 Paris (FR); CLEMENT, Christelle, F-75013 Paris (FR); CLEMENT, Martine, F-75013 Paris (FR); CLEMENT, Sabine, F-75013 Paris (FR)
(74) Mandataire: CAPRI SARL
(86) Numéro de dépôt international: FR9601503
(87) Numéro de publication internationale: WO9712181

(56) Documents cités:
- EP-A- 0 055 000
- WO-A-95/02157
- DE-U- 8 911 402
- US-A- 4 071 080

## Description

La présente invention concerne un dispositif de gestion optimisée de l'air dans un local.

Dans les locaux d'habitation et locaux professionnels, on constate qu'aujourd'hui les fonctions de chauffage, de ventilation, d'isolation thermique, d'isolation acoustique, de rafraîchissement de l'air en été, etc. sont traitées unilatéralement et séparément uniquement pour répondre aux problèmes spécifiques posés par chacune d'elles. Ainsi, le document EP-0 055 000 divulgue un dispositif de gestion de l'air réalisant les fonctions de ventilation et de chauffage d'un local. D'autre part, le document DE-U-89 11 402 divulgue un dispositif de refroidissement de l'air d'un local en extrayant de la chaleur du flux d'air entrant, la chaleur récupérée étant utilisée pour chauffer de l'eau. Cet éparpillement technique conduit à, d'une part, une sommation des coûts ne conduisant pas à une optimisation des coûts globaux, et d'autre part, un chevauchement voire à une annihilation des techniques spécifiques à chaque fonction ne conduisant pas non plus à une optimisation des résultats ainsi qu'à une fiabilité optimale avec des coûts d'usage réduits.

Or, l'optimisation des prestations aérauliques d'une enceinte, que ce soit pour améliorer la salubrité des locaux, la qualité de vie, ou les coûts de consommation et d'investissement, est devenue ces dernières années un problème de plus en plus important. Un but recherché étant notamment de faire bénéficier aux logements dits sociaux de la même qualité de vie que celle dont peuvent se prévaloir aujourd'hui les réalisations haut de gamme. En particulier, l'augmentation du taux horaire de renouvellement d'air, de plus en plus préconisé pour obtenir une meilleure salubrité des locaux ne fait qu'accroître l'importance qu'il est nécessaire de donner à une bonne gestion de l'air introduit dans les locaux.

De plus, pour obtenir un confort et des coûts d'usage correspondant aux attentes des utilisateurs, il est nécessaire d'individualiser la gestion de l'air, c'est-à-dire de la limiter au volume de base occupé. Ainsi, il est souhaitable que chaque utilisateur puisse gérer le niveau et la quantité du confort qui lui convient, sans interférer ni subir les influences de son voisinage. Par contre, pour éviter d'une part une intervention trop importante de l'utilisateur pour mettre en oeuvre cette gestion, et d'autre part l'utilisation d'un dispositif trop complexe au cas où celui-ci serait entièrement automatisé, il est souhaitable que la gestion globale de l'air soit réalisée automatiquement en fonction des attentes de l'utilisateur, celui-ci pouvant commander directement les fonctions particulières. Pour ce faire, il est notamment nécessaire que cette gestion de l'air d'un local soit liée aux caractéristiques spécifiques du bâtiment ainsi qu'aux conditions climatiques externes.

La présente invention a précisément pour but d'améliorer la gestion de l'air avec un coût global très inférieur à celui obtenu actuellement en raison de la disparité des techniques.

Ainsi, la présente invention a notamment pour but de fournir un dispositif de gestion de l'air dans un local apportant un maximum de confort naturel, c'est-à-dire impliquant une intervention minimale de l'utilisateur, tout en individualisant au maximum cette gestion de l'air.

La présente invention a aussi pour but de fournir un dispositif de gestion de l'air dans un local qui s'adapte aux conditions d'occupation du local et aux contraintes climatiques externes.

La présente invention a encore pour but de fournir un tel dispositif qui améliore la qualité de l'air ainsi que la salubrité des locaux.

La présente invention a encore pour but de fournir un tel dispositif pour permettre une économie de consommation énergétique.

La présente invention a encore pour but un tel dispositif qui diminue grandement les influences négatives sur l'environnement.

La présente invention a donc pour objet un dispositif de gestion de l'air dans des locaux, caractérisé en ce qu'il comprend une unité de traitement comprenant :
a. des moyens pour regrouper dans cette unité de traitement les flux aérauliques entrant, sortant et circulant d'un local,
b. des moyens pour déterminer des paramètres caractéristiques desdits flux entrant, sortant et circulant,
c. des moyens pour modifier au moins certains desdits paramètres en fonction des besoins de l'utilisateur ou de critères prédéterminés, ces moyens pour modifier comportant des moyens pour extraire de l'énergie thermique d'au moins un desdits flux aérauliques regroupés, et des moyens pour traiter lesdits flux aérauliques,
d. des moyens pour délivrer au moins une partie de ladite énergie thermique extraite à un dispositif de préchauffage d'eau , et
e. des moyens pour redistribuer lesdits flux aérauliques traités en fonction desdits paramètres modifiés.

Lesdits paramètres caractéristiques desdits flux aérauliques entrant, sortant et circulant d'un local peuvent comprendre la température, le débit et le taux d'humidité.

De manière correspondante, lesdits moyens pour déterminer lesdits paramètres peuvent comprendre des capteurs de température, de débit et d'humidité.

De préférence, lesdits moyens pour regrouper les flux aérauliques comprennent un dispositif de ventilation qui aspire dans l'unité de traitement les flux d'air circulant dans les pièces d'un local.

Avantageusement, lesdits moyens pour extraire de l'énergie thermique desdits flux d'air comprennent une pompe à chaleur.

De préférence, ladite énergie thermique extraite est délivrée à un dispositif de préchauffage d'eau, en particulier de l'eau chaude sanitaire. Ainsi, on réduit les coûts d'usage en extrayant et en utilisant les calories de l'air rejeté à l'extérieur, ce qui entraîne également une baisse sensible de l'influence néfaste sur l'environnement.

Avantageusement, ladite énergie thermique extraite peut aussi être délivrée à un dispositif de chauffage agissant sur les flux d'air entrant, en particulier lorsque le préchauffage de l'eau chaude sanitaire est complété.

De préférence, lesdits moyens pour traiter les flux d'air comprennent des moyens de ventilation et/ou de filtration et/ou de chauffage desdits flux d'air. Avantageusement, lesdits dispositifs de filtration comprennent des moyens d'odorisation et/ou d'humidification et/ou de désinfection des flux d'air. Ainsi, le dispositif de l'invention permet d'obtenir une meilleure qualité de l'air, une meilleure salubrité des locaux et permet l'augmentation éventuel du taux de ventilation.

Avantageusement, lesdits moyens pour redistribuer comprennent des moyens pour diriger le flux d'air sortant vers les flux d'air entrant. En particulier, lesdits moyens pour diriger le flux d'air sortant vers les flux d'air entrant peuvent comporter une vanne actionnée lorsque la température desdits flux entrant est située au-dessus d'une valeur prédéterminée. Ainsi, particulièrement en saison chaude, le flux d'air sortant, refroidi par la pompe à chaleur, peut être réinjecté dans le flux d'air entrant pour réaliser un rafraîchissement naturel de la température dans le local.

Selon un mode de réalisation préférée de l'invention, l'unité de traitement comporte :
- un caisson d'aspiration dans lequel sont aspirés les flux d'air circulant dans les pièces d'un local,
- une pompe à chaleur puisant l'énergie thermique contenue dans lesdits flux d'air aspirés et rejetant un flux d'air refroidi,
- un dispositif de chauffage de l'eau, auquel ladite énergie thermique puisée est distribuée pour préchauffer l'eau,
- un caisson d'entrée dans lequel les flux d'air entrant sont ventilés et/ou filtrés et/ou odorisés et/ou humidifiés et/ou désinfectés et/ou chauffés avant d'entrer dans les locaux.

Ainsi, en intégrant la gestion de l'air dans la totalité de ses fonctions en une seule entité regroupant en outre la ventilation, le taux de renouvellement d'air, le chauffage, le préchauffage de l'eau chaude, en particulier l'eau chaude sanitaire, la filtration, et l'humidification de l'air, etc. permet d'obtenir un coût global très inférieur à celui obtenu actuellement. De plus, l'invention peut être avantageusement intégrée dans un système d'isolation dynamique, ce qui apporte naturellement le confort thermique par le jeu d'inertie thermique, c'est-à-dire par une maîtrise thermique de l'air entrant, de sorte qu'on obtient un maximum de confort naturel, c'est-à-dire impliquant un minimum d'interventions de l'utilisateur avec un minimum de consommation énergétique. De plus, la présente invention permet d'individualiser le confort et les coûts par rapport aux attentes des utilisateurs individuels ce qui permet une gestion de l'air sélective sans interférences ni influences du voisinage.

D'autres caractéristiques et avantages de la présente invention apparaîtront au cours de la description suivante d'une forme de réalisation de l'invention, donnée à titre d'exemple non limitatif, en regard des dessins joints, sur lesquels :
- la figure 1 est une vue de face schématique d'un dispositif selon l'invention,
- la figure 2 est une vue latérale schématique du dispositif de la figure 1, et
- la figure 3 est une vue schématique du dispositif des figures 1 et 2, intégré dans un système d'isolation dynamique.

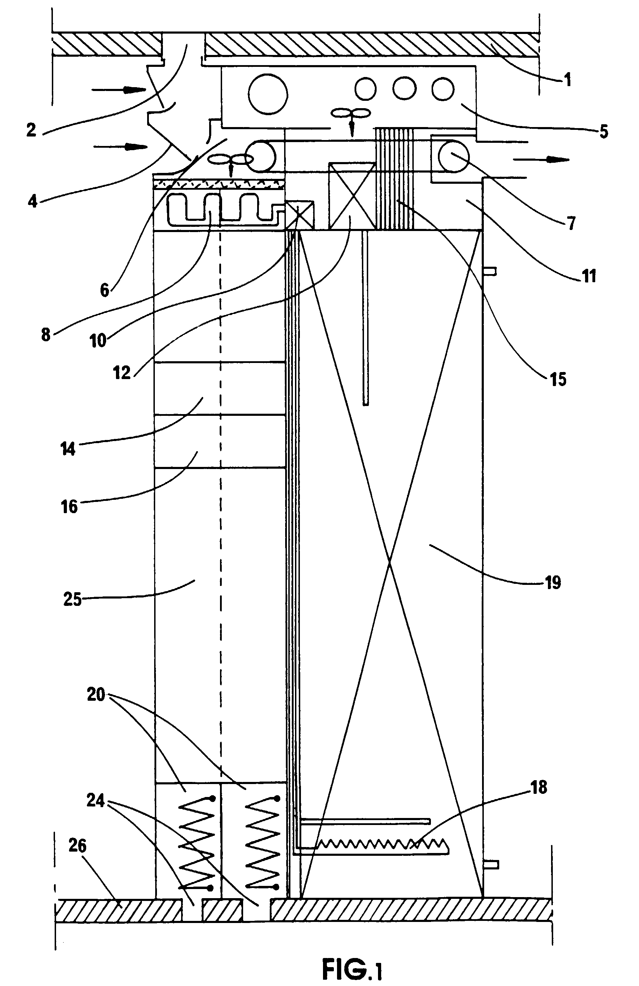

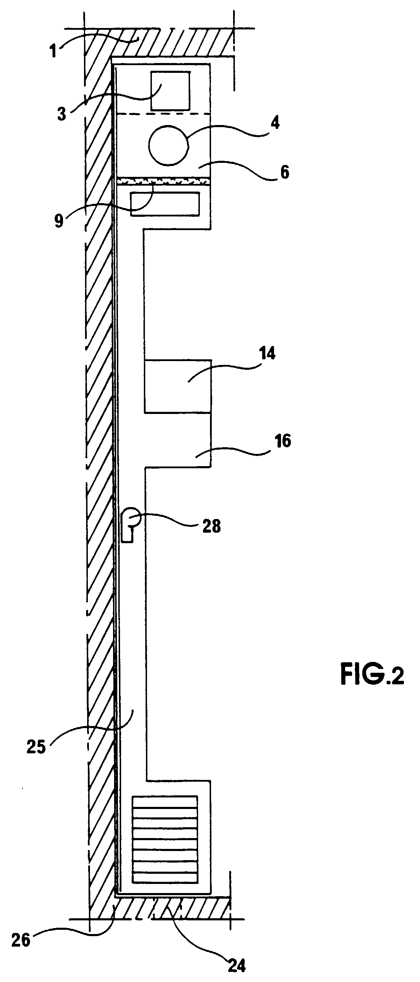

En référence aux figures 1 et 2, il est représenté un dispositif de gestion de l'air d'un local selon l'invention. Par local, on entend des locaux d'habitation ou professionnels de tout type, tels que par exemple des logements, des appartements, des maisons ou des bureaux.

Avantageusement, le dispositif de l'invention devrait être un produit s'intégrant au lieu de vie. Il devrait donc revêtir un aspect extérieur convivial et pourrait être par exemple réalisé sous la forme d'une armoire. Evidemment, selon le local où le dispositif est destiné à être disposé, il peut avoir un aspect extérieur quelconque, du moment qu'il remplit toutes les fonctions caractéristiques de l'invention.

Le dispositif selon l'invention comporte une unité de traitement qui incorpore avantageusement tous les moyens techniques de l'invention de sorte que l'ensemble de la gestion de l'air d'un local est réalisé dans cette unité de traitement. Ainsi, en regroupant l'ensemble de cette gestion de l'air dans une seule unité, comportant des moyens -spécifiques permettant de réaliser des fonctions spécifiques, tel que décrit ci-dessous, on coordonne les différentes fonctions du dispositif de gestion, à savoir le chauffage, la ventilation, etc., ce qui permet de diminuer de manière très importante les coûts d'investissement et de fonctionnement du dispositif.

Plus particulièrement, l'unité de traitement de l'invention comporte avantageusement les quatre éléments suivants :
- Un caisson d'aspiration 5 dans lequel sont aspirés, au moyen d'un dispositif de ventilation, en particulier une ventilation mécanique contrôlée, les flux d'air circulant dans les pièces du local, en particulier l'air vicié pris dans la cuisine, les toilettes, la salle d'eau, etc..
- Des moyens 11 pour extraire et stocker de l'énergie thermique desdits flux d'air circulant aspirés dans ledit caisson d'aspiration, en particulier une pompe à chaleur 11 qui puise les calories contenues dans l'air aspiré par la ventilation 5, ladite pompe à chaleur 11 rejetant de l'air refroidi.
- Un dispositif de chauffage d'eau 19, en particulier un chauffe-eau à accumulation pour l'eau chaude sanitaire, dont l'eau est prioritairement préchauffée par lesdites calories puisées par ladite pompe à chaleur 11 dans l'air aspiré par la ventilation 5.
- Un caisson d'entrée 25 dans lequel circulent et sont traités le ou les flux d'air entrant, avant d'entrer dans les locaux.

De préférence, l'unité de traitement comporte en outre un caisson de commande 14 au moyen duquel l'utilisateur pourra influer sur le fonctionnement du dispositif.

Le fonctionnement de ces différents éléments ainsi que d'autres éléments annexes, qui peuvent être prévus par le dispositif de l'invention, vont être expliqués ci-dessous. Cette description du fonctionnement du dispositif de l'invention sera réalisée par rapport à un fonctionnement -appelé "fonctionnement hiver", c'est-à-dire lorsque la température extérieure est inférieure à la température intérieure du local, et un fonctionnement dit "fonctionnement été", dans lequel la température extérieure est supérieure à la température intérieure.

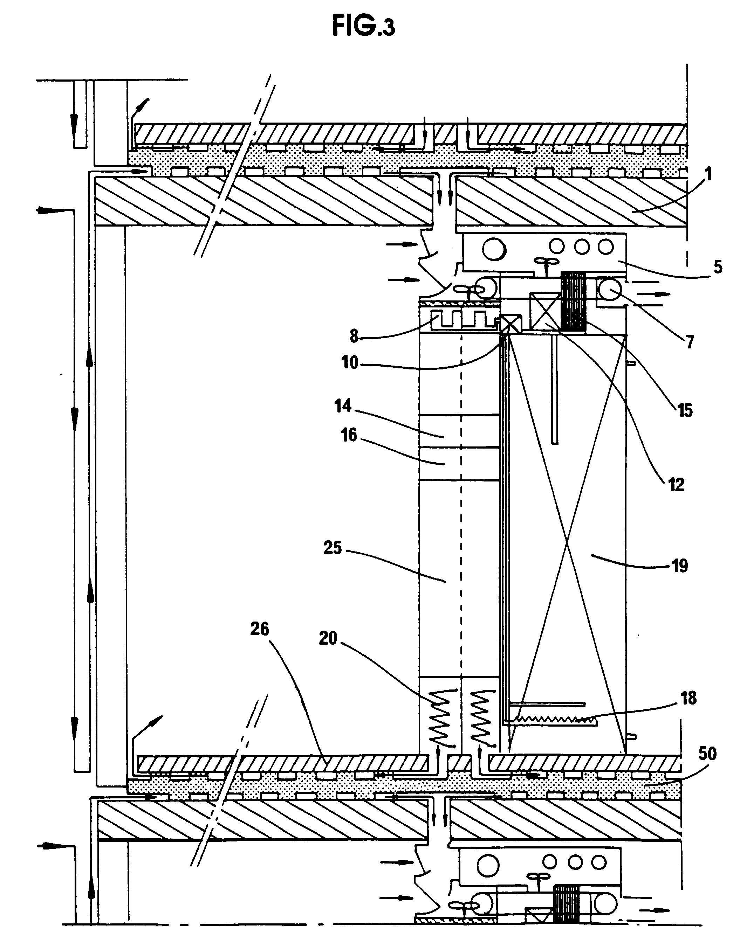

En fonctionnement hiver, l'air neuf, c'est-à-dire le flux d'air entrant, est introduit dans la partie supérieure de l'unité de traitement. En référence à la figure 1, le flux d'air entrant est introduit dans l'unité de traitement par une goulotte de raccordement 2 ménagée dans la dalle d'étage 1 formant le plafond. Ceci est caractéristique du mode de réalisation représenté également sur la figure 3, où le dispositif de l'invention est intégré dans un système d'isolation dynamique, c'est-à-dire où l'air circule dans les parois et entre les étages avant de pénétrer dans les différents pièces. Ce système sera décrit plus en détail en référence à la figure 3. Bien entendu, le dispositif de l'invention peut également être mis en oeuvre de manière totalement indépendante, dans ce cas l'entrée du flux d'air entrant sera réalisé à travers une vanne adaptée, par exemple la vanne 3 représentée sur la figure 2. Le flux d'air entrant est donc amené d'abord dans l'unité de traitement, en l'occurrence dans un caisson aéraulique 6 disposé au voisinage de ladite entrée 2 ou 3 mentionnée ci-dessus, puis le flux d'air entrant s'écoule dans un caisson d'entrée 25 à travers un filtre 9. Le caisson d'entrée 25 comporte avantageusement un caisson de traitement 16 dans lequel le flux d'air entrant peut être traité sur le plan de l'odorisation, de l'humidification, voire de la désinfection ou d'autres fonctions souhaitées. Simultanément, le flux d'air entrant, lorsqu'il est dans le caisson 25, peut être chauffé au moyen d'un jeu de de résistance 20 disposé dans le fond dudit caisson 25. Ce chauffage peut fournir la totalité ou seulement une partie du chauffage des locaux. Selon la température souhaitée pour le flux d'air entrant lorsque celui-ci entre dans le local, un ventilateur de brassage 28 est prévu dans le caisson d'entrée 25 de sorte -que ledit flux d'air pourra être brassé ou son débit être augmenté au moment où celui-ci pénètre dans le local.

En référence aux figures 1, 2 et 3, le flux d'air entrant, après avoir été traité dans le caisson d'entrée 25 et dans le caisson de traitement 16, s'écoule à travers des goulottes de raccordement 24 situées dans le fond de l'unité de traitement, à nouveau à travers une isolation dynamique située dans le plancher 26 avant d'entrer dans le local. Bien entendu, lorsque le dispositif est réalisé de manière indépendante, l'entrée d'air se fera directement dans le local à partir de l'extrémité inférieure de l'unité de traitement.

Parallèlement au traitement du flux d'air entrant mentionné ci-dessus, la ventilation mécanique contrôlée 5 extrait les flux circulant dans le local, en particulier l'air vicié issu des cuisines, de la salle de bains ou des toilettes, et les amène dans un caisson correspondant. Lesdits flux d'air aspirés sont ensuite traités par une pompe à chaleur 11. Ainsi, ledit flux d'air circulant aspiré passe sur l'évaporateur 15 de la pompe à chaleur où il cède, par compression 12, son énergie thermique ou ses calories, qui sont transmises ensuite soit à un dispositif de chauffage de l'eau, soit à un dispositif de chauffage de l'air, en fonction des besoins de l'utilisateur. De préférence, ladite énergie thermique est transmise prioritairement à l'eau chaude sanitaire par le condenseur 18 situé dans le fond du dispositif de chauffe-eau 19.

Après ce traitement, le flux d'air est rejeté à l'extérieur à une température relativement faible d'environ 5°C. En hiver, le dispositif de l'invention permet donc d'éviter de rejeter vers l'extérieur un flux d'air à température élevée, ce qui représente une perte d'énergie considérable, ainsi qu'une nuisance pour l'environnement.

Comme mentionné ci-dessus, la chaleur recueillie par la pompe à chaleur depuis le flux d'air circulant aspiré, est prioritairement orientée vers le dispositif de chauffage d'eau 19 au moyen d'une électrovanne 10. Lorsque l'eau chaude a atteint sa température d'utilisation normale, ladite vanne 10 oriente la chaleur recueillie vers un échangeur 8 qui permet de préchauffer l'air entrant. Ainsi, le dispositif de l'invention permet de réutiliser la chaleur du flux sortant pour chauffer prioritairement l'eau, mais même le flux d'air entrant, ce qui représente une économie de coût de fonctionnement importante. De préférence, lorsque les besoins de chauffage d'eau se font à nouveau sentir, la vanne 10 favorise à nouveau cette fonction. On évite ainsi en particulier de rejeter inutilement à l'extérieur une quantité non négligeable d'énergie thermique.

Cette priorité du préchauffage de l'eau chaude sur le préchauffage de l'air par électrovanne 10 sera de préférence une fonction automatisée du dispositif. De même, on peut prévoir une suppression automatique dudit préchauffage de l'air lorsque la température dans le local dépasse une certaine valeur prédéterminée, par exemple 20°C.

En fonctionnement été, la différence principale du dispositif de l'invention consiste essentiellement en la suppression des apports thermiques en provenance de la pompe à chaleur 11 ou des résistances de chauffage 20. Par contre, à partir d'une certaine température intérieure prédéterminée, par exemple 24°C, l'air frais sortant de la pompe à chaleur peut être réintroduit dans le circuit d'air entrant grâce une vanne motorisé 7. Cette valeur de température prédéterminée est avantageusement réglable par l'utilisateur, et le dispositif, en l'occurrence l'unité de traitement, devrait comporter dans son caisson de commande 14, la possibilité de réaliser cette fonction de rafraîchissement même en dessous de la valeur prédéterminée. En outre, lorsque la température extérieure est élevée, les fonctions suivantes peuvent également être obtenues par le dispositif de l'invention :
- Une surventilation des locaux en puisant de l'air extérieur dans les surfaces orientées nord. Ceci est réalisé au moyen d'une vanne 4 permettant l'ouverture d'un flux d'air complémentaire provenant de la façade nord et alimenté vers le flux d'air entrant, comme décrit ci-dessus. De préférence, cette fonction d'ouverture de flux d'air complémentaire, ainsi qu'une éventuelle fermeture de l'entrée d'air habituelle, pourra être automatisée et sera dépendante d'une température intérieure prédéterminée, par exemple 24°C. De la même manière qu'avant, il sera avantageux de prévoir dans le caisson de commande la possibilité de déroger manuellement à cette fonction automatique.
- Un accroissement des performances de la pompe à chaleur afin d'atteindre un niveau supérieur de rafraîchissement, voire de climatisation des locaux.

Avantageusement comme représenté sur la figure 3, le dispositif de gestion d'air d'un local selon l'invention peut être intégré dans une isolation dynamique. Dans un tel système, le flux d'air entrant, avant de pénétrer dans l'unité de traitement puis dans le local, circule dans les différentes parois du bâtiment comme représenté par les différentes flèches sur la figure 3. Pendant cette circulation dans les parois, le flux d'air vient en contact de différents matériaux 50, tel que des matériaux d'isolation ou des matériaux pariéto-dynamiques, permettant notamment de stocker la nuit une certaine fraîcheur et de la redistribuer ensuite le jour. L'intégration du dispositif de l'invention dans un tel système d'isolation dynamique permet donc d'obtenir des résultats particulièrement satisfaisants pour la gestion individuel du local. Ainsi, le fonctionnement été du dispositif de l'invention peut dans ce cas s'effectuer par exemple uniquement entre midi et 20 heures de façon à bénéficier du rendu dans les locaux de la fraîcheur de la nuit emmagasinée dans les masses du mur et du plancher. De plus, lors de forts ensoleillements des façades, une partie de l'air des locaux pourra être refoulé vers la façade.

Le dispositif de l'invention a été décrit ci-dessus en référence à un mode de réalisation particulier incorporant certains moyens spécifiques pour le fonctionnement de l'unité de traitement. Il est entendu que tous moyens équivalents réalisant les mêmes fonctions pourront être utilisés, notamment en ce qui concerne les dispositifs de chauffage, les dispositifs de ventilation, les vannes, la répartition des différents caissons de l'unité de traitement, etc. . La caractéristique principale du dispositif de l'invention est de regrouper dans une seule entité toutes les fonctions de gestion de l'air dans un local, permettant simultanément d'augmenter la qualité de l'air, de réaliser des économies d'énergie, d'assurer le préchauffage et/ou de l'air, et d'apporter à l'utilisateur individuel un confort d'utilisation très élevé.

## Revendications

1. Dispositif de gestion de l'air dans des locaux comprenant une unité de traitement qui comporte :
a. des moyens (2, 3 ; 5) pour regrouper dans cette unité de traitement les flux aérauliques entrant, sortant et circulant d'un local,
b. des moyens pour déterminer des paramètres caractéristiques desdits flux entrant, sortant et circulant,
c. des moyens (11, 4, 28, 9, 8) pour modifier au moins certains desdits paramètres en fonction des besoins de l'utilisateur ou de critères prédéterminés, ces moyens pour modifier comportant :
c1. des moyens (4, 28, 9, 8) pour traiter lesdits flux aérauliques regroupés, et
c2. des moyens (11) pour extraire de l'énergie thermique d'au moins un desdits flux aérauliques regroupés, et ,
d. des moyens (7) pour redistribuer lesdits flux aérauliques traités en fonction desdits paramètres modifiés,
le dispositif étant caractérisé en ce que l'unité de traitement comporte en outre :
e. un dispositif de préchauffage d'eau (19), et
f. des moyens pour délivrer au moins une partie de ladite énergie thermique extraite audit dispositif de préchauffage d'eau (19).

2. Dispositif selon la revendication 1, dans lequel lesdits paramètres caractéristiques desdits flux aérauliques entrant, sortant et circulant d'un local comprennent la température, le débit et le taux d'humidité, et lesdits moyens pour déterminer lesdits paramètres comprennent des capteurs de température, de débit et d'humidité.

3. Dispositif selon la revendication 1 ou la revendication 2, dans lequel lesdits moyens pour regrouper les flux aérauliques comprennent un dispositif de ventilation (5) qui aspire dans l'unité de traitement les flux d'air circulant dans les pièces d'un local.

4. Dispositif selon l'une quelconque des revendications précédentes, dans lequel lesdits moyens pour extraire l'énergie thermique desdits flux d'air comprennent une pompe à chaleur (11).

5. Dispositif selon l'une quelconque des revendications précédentes, dans lequel ladite énergie thermique extraite est en outre délivrée à un dispositif de chauffage (8) agissant sur les flux d'air entrant.

6. Dispositif selon l'une quelconque des revendications précédentes, dans lequel lesdits moyens pour traiter les flux d'air comprennent des moyens de ventilation (4, 28) et/ou de filtration (9) et/ou de chauffage (8) desdits flux d'air.

7. Dispositif selon la revendication 6, dans lequel lesdits dispositifs de filtration (9) comprennent des moyens d'odorisation et/ou d'humidification et/ou de désinfection des flux d'air.

8. Dispositif selon l'une quelconque ces revendications précédentes, dans lequel lesdits moyens pour redistribuer comprennent des moyens (7) pour diriger le flux d'air sortant vers les flux d'air entrant.

9. Dispositif selon la revendication 8, dans lequel lesdits moyens pour diriger le flux d'air sortant vers les flux d'air entrant comportent une vanne (7) actionnée lorsque la température desdits flux entrant est située au-dessus d'une valeur prédéterminée.

10. Dispositif selon l'une quelconque des revendications précédentes, dans lequel l'unité de traitement comporte :
- un caisson d'aspiration (5) dans lequel sont aspirés les flux d'air circulant dans les pièces d'un local,
- une pompe à chaleur (11) puisant l'énergie thermique contenue dans lesdits flux d'air aspirés et rejetant un flux d'air refroidi,
- un dispositif de chauffage de l'eau (19) comportant un réservoir d'eau et des moyens de chauffage (18), auxquels ladite énergie thermique puisée est distribuée pour préchauffer l'eau,
- un caisson d'entrée (25) dans lequel les flux d'air entrant sont ventilés et/ou filtrés et/ou odorisés et/ou humidifiés et/ou désinfectés et/ou chauffés avant d'entrer dans les locaux.

11. Dispositif selon la revendication 10, dans lequel l'unité de traitement comporte un caisson de commande (14) pour régler et/ou modifier manuellement les critères prédéterminés et/ou les besoins de l'utilisateur.

12. Dispositif selon l'une quelconque des revendications précédentes, dans lequel ledit dispositif de gestion est réalisé sous la forme d'une armoire disposée dans le local.

## Patentansprüche

1. Vorrichtung zur Behandlung von Luft in Räumen, die eine Bearbeitungseinheit aufweist, die folgende Bestandteile umfaßt:
a. Einrichtungen (2, 3; 5), die dazu dienen, Luftströme, die in einen Raum hineinströmen, ihn verlassen und in ihm zirkulieren, in dieser Bearbeitungseinheit neu zu ordnen,
b. Einrichtungen zum Bestimmen der charakteristischen Parameter dieser hineinströmenden, herausströmenden und zirkulierenden Ströme,
c. Einrichtungen (11, 4, 28, 9, 8) zum Modifizieren wenigstens einiger dieser Parameter in Abhängigkeit von den Bedürfnissen des Verwenders oder von vorgegebenen Kriterien, wobei diese Einrichtungen zum Modifizieren folgendes umfassen:
c1. Mittel (4, 28, 9, 8) zum Behandeln der besagten, umgruppierten Luftströme und
c2. Mittel (11) zum Entziehen von thermischer Energie aus wenigstens einem der umgruppierten Luftströme und
d. Einrichtungen (7) zum Wiederabgeben der in Abhängigkeit von modifizierten Parametern behandelten Luftströme,
**dadurch gekennzeichnet**, daß die Bearbeitungseinheit weiterhin folgende Bestandteile umfaßt:
e. eine Vorrichtung (19) zum Vorwärmen von Wasser und
f. Einrichtungen zum Abgeben wenigstens eines Teils der entzogenen thermischen Energie an die Vorrichtung (19) zum Vorwärmen von Wasser.

2. Vorrichtung nach Anspruch 1, bei der die charakteristischen Parameter der in einen Raum hineinströmenden, aus ihm herausströmenden und in ihm zirkulierenden Luftströme die Temperatur, den Durchsatz und die Feuchtigkeitsrate umfassen, und bei der die Einrichtungen zum Bestimmen dieser Parameter Sensoren für die Temperatur, den Durchsatz und die Feuchtigkeit umfassen.

3. Vorrichtung nach Anspruch 1 oder 2, bei der die Einrichtungen zum Umgruppieren der Luftströme eine Ventilationsvorrichtung (5) umfassen, die in der Bearbeitungseinheit die Luftströme ansaugt, die in den Bereichen eines Raumes zirkulieren.

4. Vorrichtung nach einem der vorhergehenden Ansprüche, bei der die Mittel zum Entziehen von thermischer Energie aus den Luftströmen eine Wärmepumpe (11) umfassen.

5. Vorrichtung nach einem der vorhergehenden Ansprüche, bei der die entzogene thermische Energie weiterhin an eine Heizvorrichtung (8) abgegeben wird, die auf die eintretenden Luftströme einwirkt.

6. Vorrichtung nach einem der vorhergehenden Ansprüche, bei der die Einrichtungen zum Behandeln der Luftströme Ventilationseinrichtungen (4, 28) und/oder Filtereinrichtungen (9) und/oder Heizeinrichtungen (8) für diese Luftströme umfassen.

7. Vorrichtung nach Anspruch 6, bei der die Filtereinrichtungen (9) Einrichtungen umfassen, die dazu dienen, die Luftströme mit einem Duft zu versehen und/oder zu befeuchten und/oder zu desinfizieren.

8. Vorrichtung nach einem der vorhergehenden Ansprüche, bei der die Einrichtungen zum Wiederabgeben Mittel (7) umfassen, die dazu dienen, die austretenden Luftströme zu den eintretenden Luftströmen hin zu richten.

9. Vorrichtung nach Anspruch 8, bei der die Mittel, die dazu dienen, die austretenden Luftströme auf die eintretenden Luftströme zu richten, einen Schieber (7) umfassen, der betätigt wird, wenn die Temperatur der eintretenden Ströme oberhalb eines vorbestimmten Wertes liegt.

10. Vorrichtung nach einem der vorhergehenden Ansprüche, bei der die Behandlungseinheit folgende Bestandteile umfaßt:
- ein Ansauggehäuse (5), in dem die Luftströme angesaugt werden, die in Bereichen eines Raumes zirkulieren,
- eine Wärmepumpe (11), die die thermische Energie, die in den angesaugten Luftströmen enthalten ist, abschöpft und einen Strom gekühlter Luft abgibt,
- eine Wasser-Heizvorrichtung (19), die einen Wasserbehälter und Heizeinrichtungen (18) umfaßt, denen die abgeschöpfte thermische Energie zugeführt wird, um das Wasser vorzuwärmen,
- ein Eintrittsgehäuse (25), in welchem die Luftströme ventiliert und/oder gefiltert und/oder mit einem Duft versehen und/oder befeuchtet und/oder desinfiziert und/oder erwärmt werden, bevor sie in die Räume eintreten.

11. Vorrichtung nach Anspruch 10, bei der die Behandlungseinheit eine Steuereinheit (14) zum von Hand erfolgenden Regeln und/oder Modifizieren der vorbestimmten Kriterien und/oder der Bedürfnisse des Verwenders umfaßt.

12. Vorrichtung nach einem der vorhergehenden Ansprüche, bei der die Behandlungseinrichtung in Form eines Schrankes ausgebildet ist, der in dem Raum aufgestellt ist.

## Claims

1. Apparatus for managing air in premises, the apparatus comprising a treatment unit which includes:
a) means (2, 3; 5) for grouping together in said treatment unit the incoming, outgoing, and circulating air flows of premises;
b) means for determining parameters characteristic of said incoming, outgoing, and circulating flows;
c) modification means (11, 4, 28, 9, 8) for modifying at least some of said parameters as a function of user requirements or of predetermined criteria, said modification means comprising:
c1) means (4, 28, 9, 8) for treating said grouped-together air flows; and
c2) means (11) for extracting heat energy from at least one of said grouped-together air flows; and
d) redistribution means (7) for redistributing said treated air flows as a function of said modified parameters;
the apparatus being characterized in that the treatment unit further comprises:
e) a device (19) for preheating water; and
f) means for delivering at least a portion of said extracted heat energy to said device (19) for preheating water.

2. Apparatus according to claim 1, in which said characteristic parameters of said incoming, outgoing, and circulating air flows of premises comprise temperature, flow rate, and humidity level, and said means for determining said parameters comprise temperature, flow rate, and humidity sensors.

3. Apparatus according to claim 1 or claim 2, in which said means for grouping together the air flows comprise a fan device (5) which sucks the air flows circulating in the rooms of premises into the treatment unit.

4. Apparatus according to any preceding claim, in which said means for extracting heat energy from said air flows comprise a heat pump (11).

5. Apparatus according to any preceding claim, in which said extracted heat energy is also delivered to a heater device (8) acting on the incoming air flows.

6. Apparatus according to any preceding claim, in which said means for treating the air flows comprise ventilation means (4, 28) and/or filter means (9) and/or heater means (8) for said air flows.

7. Apparatus according to claim 6, in which said filter devices (9) comprise means for freshening and/or humidifying and/or disinfecting air flows.

8. Apparatus according to any preceding claim, in which said redistribution means comprise means (7) for directing the outgoing air flow towards the incoming air flows.

9. Apparatus according to claim 8, in which said means for directing the outgoing air flow towards the incoming air flows comprise a valve (7) which is actuated when the temperature of said incoming flows lies above a predetermined value.

10. Apparatus according to any preceding claim, in which the treatment unit includes:
· a suction chamber (5) into which the air flows circulating in the rooms of premises are sucked;
· a heat pump (11) extracting heat energy from said sucked-in air flows and delivering a cooled air flow;
· a water heater device (19) comprising a water tank and heater means (18) to which said extracted heat energy is delivered to preheat the water; and
· an inlet chamber (25) into which the incoming air flows are blown and/or filtered and/or freshened and/or humidified and/or disinfected and/or heated prior to entering into the premises.

11. Apparatus according to claim 10, in which the treatment unit includes a control chamber (14) to control and/or modify manually the predetermined criteria and/or the user requirements.

12. Apparatus according to any preceding claim, in which said management apparatus is implemented in the form of a cabinet located in the premises.
